# EUROPEAN PATENT APPLICATION

(11) **EP 4 293 474 A1**
(43) Date of publication of application: **20.12.2023**
(21) Application number: 22816292.1
(22) Date of filing: 14.04.2022
(51) Int. Cl.: G06F 1/16, G09F 9/30

(54) **ELECTRONIC APPARATUS COMPRISING FLEXIBLE DISPLAY**

(30) Priority: 04.06.2021 KR 20210072856
(71) Applicant: Samsung Electronics Co., Ltd., Suwon-si, Gyeonggi-do 16677 (KR)
(72) Inventor: JEONG, Hoyoung, Suwon-si, Gyeonggi-do 16677 (KR); KANG, Hyunggwang, Suwon-si, Gyeonggi-do 16677 (KR); KANG, Jooyoung, Suwon-si, Gyeonggi-do 16677 (KR); KIM, Junhyuk, Suwon-si, Gyeonggi-do 16677 (KR); SHIN, Moonchul, Suwon-si, Gyeonggi-do 16677 (KR); CHO, Hyoungtak, Suwon-si, Gyeonggi-do 16677 (KR); LEE, Soyoung, Suwon-si, Gyeonggi-do 16677 (KR)
(74) Representative: Appleyard Lees IP LLP
(86) International application number: PCT/KR2022/005424
(87) International publication number: WO 2022/255631

(57) **Abstract**

An electronic apparatus according to one embodiment comprises: a first housing; a second housing slidably coupled to the first housing; a display having a visually exposed area that expands or reduces in response to the sliding of the second housing; a first support member located inside the first housing; a second support member which is fixed to the second housing, and which moves in a first direction or the direction opposite to the first direction on the basis of the sliding of the second housing; a sensor; and a processor operatively connected to the sensor, wherein the sensor comprises: a first structure, which is located in one region of the first support member and includes a coil pattern; a second structure, which is arranged to overlap with at least a portion of the coil pattern of the first structure, is fixed to the second support member, and rectilinearly moves in the first direction or the direction opposite to the first direction with respect to the first structure; and a sensing circuit, which is electrically connected to the coil pattern and senses inductance by using the coil pattern, and the processor can be configured to detect the state of the electronic apparatus on the basis of the sensed inductance.

## Description

### [Technical Field]

Various embodiments disclosed in the disclosure relate to an electronic device including a flexible display.

### [Background Art]

With development of display technologies, electronic devices employing flexible displays have been distributed. For example, electronic devices may include foldable electronic devices, slidable electronic devices, or rollable electronic devices. A partial area of a flexible display may include an area that may be changed to a curved surface or a flat surface. In an electronic device employing a flexible display, as a shape or a structure of at least a portion of the electronic device is changed, an extent of the display may vary and screens of various sizes may be provided to the user.

### [Disclosure]

### [Technical Problem]

The electronic device employing the flexible display may detect a state of an electronic device regarding a change in a structural change of the electronic device or an extent of the exposed display by using at least one sensor mounted in the electronic device. For example, the electronic device may detect the state of the electronic device by using an infrared proximity sensor or a time of flight (ToF) sensor. However, according to the infrared proximity sensor or the ToF sensor, a detection preciseness becomes lower at a short distance (e.g., 10 mm or less) and thus it may be difficult to precisely detect a fine change in the state of the electronic device. As another example, when the electronic device detects the state of the electronic device by using an optical sensor, it may be difficult to correct a design error of an optical structure or an error due to diffused reflection of light. As another example, when the electronic device detects the state of the electronic device by using a magnet and a Hall sensor (e.g., a Hall IC), a detection error may be caused due to an influence of a change in a magnetic field on an outside of the electronic device and magnetization of a metallic object in an interior of the electronic device.

Various embodiments may provide an electronic device that may accurately and precisely detect a state of the electronic device and an expansion degree of a display.

Various embodiments also provide an electronic device that may secure a space for components other than sensors as the sensors are efficiently disposed in the electronic device and may have an increased degree of design.

### [Technical Solution]

An electronic device according to an embodiment may include a first housing, a second housing coupled to the first housing to be slid, a display configured such that a visually exposed area thereof is expanded or contracted as the second housing is slid, a first support member located inside the first housing, a second support member fixed to the second housing, and that is moved in a first direction or an opposite direction to the first direction as the second housing is slid, a sensor, and a processor operatively connected to the sensor, the sensor may include a first structure located in one area of the first support member, and including a coil pattern, a second structure disposed to overlap at least a portion of the coil pattern of the first structure, and fixed to the second support member to be linearly moved in the first direction or the opposite direction to the first direction with respect to the first structure, and a sensing circuit electrically connected to the coil pattern and that detects an inductance by using the coil pattern, and the processor may detect a state of the electronic device based on the detected inductance.

An electronic device according to an embodiment may include a first housing, a second housing coupled to the first housing to be slid, a display including a first area located inside the housing and being visually exposed and a second area, in which a visually exposed area is variable as the second housing is slid, a first support member located inside the first housing, a second support member that is moved in a first direction or an opposite direction to the first direction as the second housing is slid, overlapping the first support member in a second direction that is perpendicular to the first direction in a first state of the electronic device, and located on a rear surface of the second area of the display in a second sate of the electronic device, a sensor, and a processor operatively connected to the sensor, the sensor may include a first structure located in one area of the first support member and including a coil pattern, a second structure fixed to the second support member to be linearly moved in the first direction or the opposite direction to the first direction with respect to the first structure, and disposed to overlap at least a portion of the coil pattern of the first structure in a third direction that is perpendicular to the first direction and the second direction, and a sensing circuit electrically connected to the coil pattern and that detects an inductance by using the coil pattern, and the processor may be configured to detect a state of the electronic device based on the detected inductance.

### [Advantageous Effects]

According to various embodiments, the electronic device may accurately and precisely detect a state of the electronic device and an expansion degree of the display.

According to various embodiments, the electronic device may secure a space for components other than sensors as the sensors are efficiently disposed in the electronic device and may have an increased degree of design.

In addition, various effects directly or indirectly recognized through the disclosure may be provided.

### [Description of Drawings]

FIG. 1 illustrates a block diagram of an electronic device in a network according to various embodiments.
FIG. 2 is an exploded perspective view of an electronic device according to an embodiment.
FIG. 3 is a plan view illustrating some configurations included in an electronic device according to an embodiment, in a first state and a second state.
FIG. 4 is a rear view illustrating some configurations of an electronic device according to an embodiment, in a first state of the electronic device.
FIG. 5 is a rear view illustrating some configurations of an electronic device according to an embodiment.
FIG. 6 is a cross-sectional view, taken along line B-B' of FIG. 5.
FIG. 7 is a cross-sectional view, taken along line C-C' of FIG. 6.
FIG. 8 is a perspective view of a first structure 291 included in an electronic device according to an embodiment.
FIG. 9 is a cross-sectional view, taken along line D-D' of FIG. 8.
FIG. 10 is a cross-sectional view, taken along line A-A' of FIG. 4, in an electronic device according to an embodiment.
FIG. 11 is a view illustrating a change in a location of a second structure with respect to a first structure according to a state of an electronic device.
FIG. 12 is a plan view illustrating a first structure of a sensor included in an electronic device according to an embodiment.
FIG. 13 illustrates a change in inductance according to a movement distance of a second structure.
FIG. 14 is a plan view illustrating a first structure of a sensor included in an electronic device according to an embodiment.
FIG. 15 illustrates a change in inductance according to a movement distance of a second structure.
FIG. 16 is a plan view of an electronic device according to an embodiment.

In relation to a description of drawings, the same or similar components will be denoted by the same or similar reference numerals.

### [Mode for Invention]

Hereinafter, various embodiments of the disclosure will be described with reference to the accompanying drawings. However, it should be understood that the disclosure is not limited to specific embodiments and includes various modifications, equivalents, and/or alternatives of the embodiments of the disclosure.

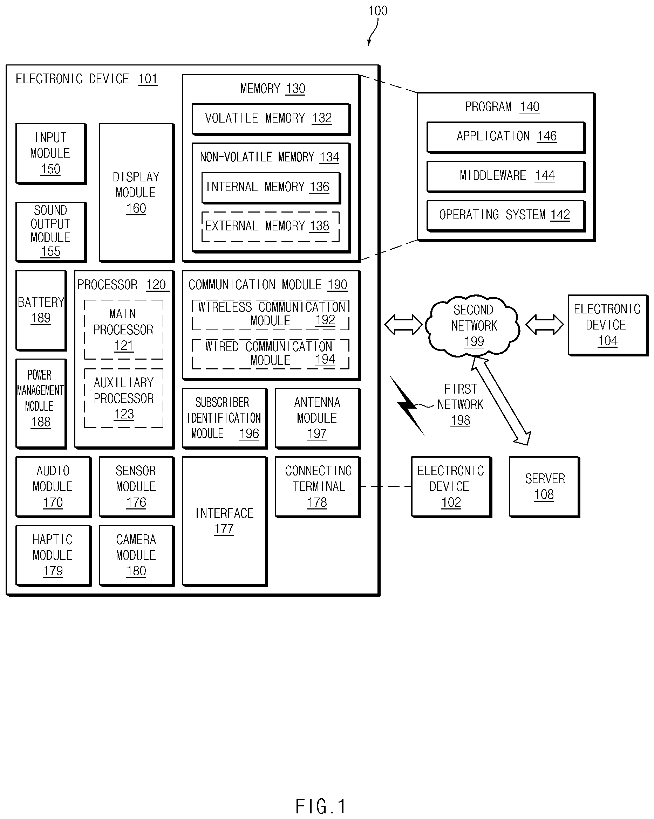

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. In some embodiments, some of the components may be implemented as single integrated circuitry. For example, some (e.g., the sensor module 176, the camera module 180, or the antenna module 197) of the components may be implemented as embedded in the display module 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), and an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. When the electronic device 101 includes the main processor 121 and the auxiliary processor, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., a neural network processing device) may include a hardware structure specified for processing an artificial intelligence (AI) model. The AI model may be generated through machine learning. The learning may be performed by the electronic device 101 performing the AI, and may be performed through an additional server (e.g., the server 108). A learning algorithm may include, for example, a supervised learning algorithm, an unsupervised learning algorithm, a semi-supervised learning algorithm, or a reinforcement learning algorithm, but the disclosure is not limited thereto. The AI model may include a plurality of artificial neural network (ANN) layers. The ANN may include a deep neural network (DNN), a convolutional neural network (CNN), a recurrent neural network (RNN), a restricted boltzman machine (RBM), a deep belief network (DBN), a bidirectional recurrent deep neural network (BRDNN), a deep Q-networks or the combination of the above networks, but the disclosure is not limited thereto. The AI model may additionally or alternatively include a software structure, in addition to a hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102) (e.g., speaker of headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). The corresponding communication module among the communication modules may communicate with the external electronic device 104 via the first network 198 (e.g., a short-range communication network, such as Bluetooth^{™}, wireless-fidelity (WiFi) direct, or infrared data association (IrDA)) or the second network 199 (e.g., a long-range communication network, such as a legacy cellular network, 5G network, next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network and a next-generation communication technology, for example, a new radio (NR) access technology after a 4G network. The NR access technology may support high-speed transmission for high capacity data (enhanced mobile broadband; eMBB), terminal power minimizing and multiple terminal access (massive machine type communication; mMTC), or ultra-reliable and low-latency communications (URLLC). The wireless communication module 192 may support a high-frequency band (e.g., mmWave band) to achieve, for example, a higher data rate. The wireless communication module 192 may support various technologies, for example, beamforming, massive multiple-input and multiple-output (MIMO), Full-dimensional MIMO, an array antenna, analog beamforming, or a large-scale antenna, to secure performance in high frequency bands. The wireless communication module 192 may support various requirements defined in the electronic device 101, the external electronic device (e.g., the electronic device 104) or the network system (e.g., the second network 199). According to one embodiment, the wireless communication module 192 may support a peak data rate (e.g., 20Gbps or more) for eMBB realization, loss coverage (e.g., 164 dB or less) for mMTC realization, or U-plane latency (e.g., 0.5 ms or less, or the round trip of 1 ms or less in each of a downlink (DL) and an uplink (UL)) for URLCC realization.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas (e.g., an array antenna). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., a bottom surface) of the printed circuit board, or disposed adjacent to the first surface to support the specific high frequency band (e.g., mmWave band), and a plurality of antennas (e.g., an array antenna) disposed on a second surface (e.g., a top surface or a side surface) of the printed circuit board or disposed adjacent to the second surface to transmit or receive a signal having the specified high frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, when the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-latency service by using, for example, distributed computing or mobile edge computing. According to various embodiments, the external electronic device 104 may include the Internet of things (IoT). The server 108 may be an artificial server using machine learning and/or a neural network. According to an embodiment, the external electronic device 104 or the server 108 may be included in the second network 199. The electronic device 101 may be applied to an artificial intelligence service (e.g., a smart home, a smart city, a smart car, or healthcare service) based on the 5G communication technology and the IoT-related technology.

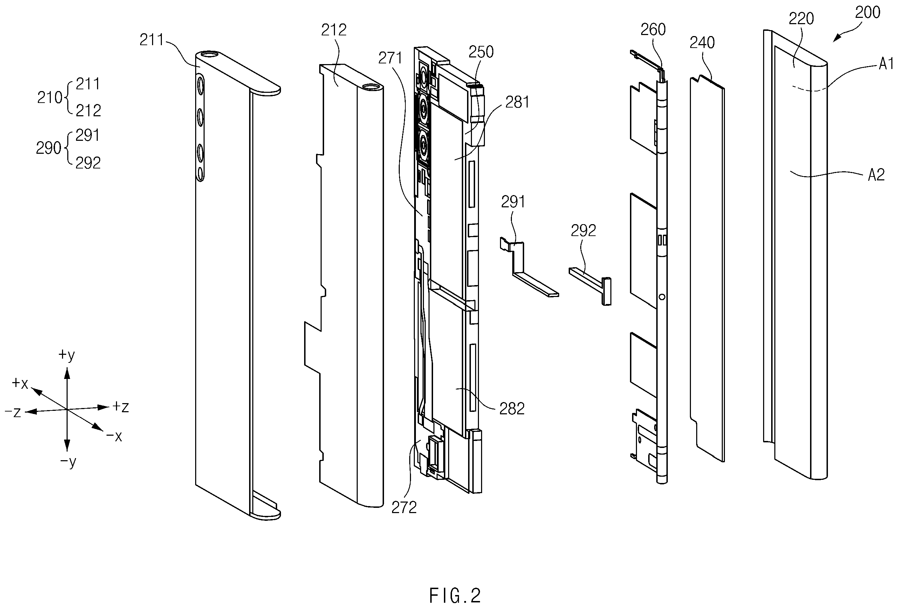

FIG. 2 is an exploded perspective view of the electronic device according to an embodiment. Referring to FIG. 2, an electronic device 200 according to an embodiment may include a housing 210, a display 220, a rear plate 240, a first support member 250, a second support member 260, at least one printed circuit board 271 and 272, at least one battery 281 and 282, and a sensor 290.

The housing 210 may define an external appearance of the electronic device 200 while surrounding configurations included in the electronic device 200. The housing 210 may include a first housing 211, and a second housing 212 that is fastened to the first housing 211 to be slid. The second housing 212 may be slid in the x direction or the -x direction with respect to the first housing 211 on one side of the first housing 211.

A state (e.g., an expansion degree) of the electronic device 200 may be determined according to disposition of the first housing 211 and the second housing 212. In a first state (e.g., a contracted state) of the electronic device 200, at least a portion of the second housing 212 may be located inside the first housing 211. As the second housing 212 is slid in the -x direction with respect to the first housing 211, at least a portion of the second housing 212 may be extracted from the first housing 211, and a state of the electronic device 200 may be sequentially changed from the first state (e.g., the contracted state) to a third state (a middle state) and a second state (e.g., an expanded state). In the second state (e.g., the expanded state) of the electronic device 200, at least a portion of the second housing 212 may be located on an outside of the first housing 211. As the second housing 212 is slid in the +x direction with respect to the first housing 211, at least a portion of the second housing 212 may be inserted into the first housing 211, and a state of the electronic device 200 may be sequentially changed from the second state (e.g., the expanded state) to the third state (the middle state) and the first state (e.g., the contracted state). The electronic device 200 may be deformed (or converted) to the first state, the second state, and the third state through a manipulation by the user or a mechanical operation. Although it has been described that the states of the electronic device 200 are the first state, the second state, and the third state, the state of the electronic device 200 are not limited thereto. For example, the states of the electronic device 200 may include information on the expansion degree of the electronic device 200 based on a movement distance of the second housing 212.

The display 220 may be a flexible display, at least a portion of which may be curved or rolled. A visually exposed area of the display 220 may be expanded or contracted as the second housing 212 is slid. In the first state of the electronic device 200, an extent of the visually exposed display 220 may be minimal, and in the second state, the extent of the visually exposed display 220 may be maximal.

The display 220 may include a first area A1, and a second area A2 that is adjacent to the first area A1. The first area A1 may be located inside the first housing 211, and may be maintained in a state, in which it is visually exposed to an outside of the electronic device 200 regardless of a state (e.g., the expansion degree) of the electronic device 200. It may be determined based on the state of the electronic device 200 whether the second area A2 is exposed to an outside of the electronic device 200. In the first state of the electronic device 200, at least one area of the display 220 may be folded in a direction of a rear surface of the display 220, and the second area A2 may be located on a side of the first area A1, which is close to the rear surface. In the first state of the electronic device 200, the second area A2 may be disposed to be covered by at least one configuration of the electronic device 200. In the second state of the electronic device 200, the second area A2 of the display 220 may be disposed in parallel to the first area A1, and may be visually exposed. Based on sliding of the second housing 212, an extent of the second area A2, which is exposed to an outside of the electronic device 200, may be variable.

The display 220 may include a display area, which is visually exposed to an outside of the electronic device 200 and on which specific visual information (or a screen) is displayed. In the first state, the display area may include the first area A1 of the display 220, and the electronic device 200 may display specific visual information through the first area A1 of the display 220. In the second state, the display area may include the first area A1 and the second area A2 of the display 220, and the electronic device 200 may display specific visual information through the first area A1 and the second area A2 of the display 220. The electronic device 200 may provide a display area that is more expanded in the second state than in the first state. In the third state, the display area may include a partial area of the first area A1 and the second area A2 of the display 220. A partial area of the second area A2 included in the display area may be determined based on the expansion degree of the electronic device 200.

The rear plate 240 may be located on a side (e.g., the -z direction) of the first area A1 of the display 220, which is close to the rear surface, in the first housing 211, and may support the rear surface of the first area A1 of the display 220. The rear surface of the first area A1 of the display 220 may be a surface of the first area A1, which faces a surface (e.g., a surface in the +z direction) that displays the screen.

The first support member 250 may be located inside the first housing 211. At least one configuration (e.g., the at least one printed circuit board 271 and 272, the at least one battery 281 and 282, or a first structure 291) of the electronic device 200 may be disposed in (or fixed to) the first support member 250. The first support member 250 may be fixed to one area of the first housing 211 regardless of sliding of the second housing 212.

The second support member 260 may be slid together with the second housing 212, in the second housing 212. In the first state, the second support member 260 may be located between the first support member 250 and the rear plate 240. In the first state, the second support member 260 may overlap the first support member 250, the rear plate 240, and the first area A1 of the display 220 in the +/-z direction. As the second housing 212 is slid in the -x direction, the second support member 260 may be slid in the -x direction. In the second state, the second support member 260 may be located on a side of the rear plate 240 and the first support member 250, in the -x direction, and may overlap the second area A2 of the display 220 in the +/-z direction. In the second state, the second support member 260 may support the rear surface of the second area A2 of the display 220.

The at least one printed circuit board 271 and 272 may include a first printed circuit board 271 and a second printed circuit board 272. Although FIG. 2 illustrates that two printed circuit boards are provided, the number of the printed circuit boards is not limited thereto. The first printed circuit board 271 and the second printed circuit board 272 may be disposed in one area of the first support member 250 or may be fixed to the first support member 250. The first printed circuit board 271 and the second printed circuit board 272 may include various electronic elements that are related to driving of the electronic device 200. For example, the at least one processor (not illustrated) (e.g., the processor 120 of FIG. 1) may be mounted on the first printed circuit board 271 or the second printed circuit board 272.

The electronic device according to an embodiment may further include a flexible printed circuit board (not illustrated) that electrically connects the display 220 and the at least one printed circuit board 271 and 272.

The at least one battery 281 and 282 may include a first battery 281 and a second battery 282. Although FIG. 2 illustrates that two batteries are provided, the number of batteries is not limited thereto. The first battery 281 and the second battery 282 may be disposed in one area (e.g., a surface in the -z direction) of the first support member 250. The first battery 281 and the second battery 282 may be disposed in parallel to the +/-y direction. The first battery 281 and the second battery 282 may supply electric power to the configurations included in the electronic device 200.

The sensor 290 may include the first structure 291 and a second structure 292. The first structure 291 may be located in one area of the first support member 250. At least a portion of the first structure 291 may be attached (or fixed) to the first support member 250. One end of the first structure 291 may be connected to the first printed circuit board 271. The first structure 291 may include a coil pattern. An alternating current (AC) signal may be applied to the coil pattern of the first structure 291, and a magnetic field may be formed due to the AC signal applied to the coil pattern. The second structure 292 may be attached (or fixed) to one area of the second support member 260. At least a portion of the second structure 292 may overlap the first structure 291 in the +/y direction. In an embodiment, the second structure 292 may include a conductor. For example, the second structure 292 may include at least any one of copper (Cu), aluminum (Al), and a sodium-potassium alloy (Nak). In another embodiment, the second structure 292 may include a shield material. For example, the second structure 292 may include ferrite.

The second structure 292 may be linearly moved in the +/-x direction as the second housing 212 and the second support member 260 are slid. According to the state of the electronic device 200, a relative location of the second structure 292 with respect to the first structure 291 may be changed. In the first state of the electronic device 200, an overlapping extent, by which the first structure 291 overlaps the second structure 292 in the +/-y direction, may be maximal. As the state of the electronic device 200 is gradually changed from the first state to the second state, the second structure 292 may be moved in the -x direction, and the overlapping extent of the first structure 291 and the second structure 292 may become gradually smaller. In the second state of the electronic device 200, the overlapping extent of the first structure 291 and the second structure 292 may be minimal.

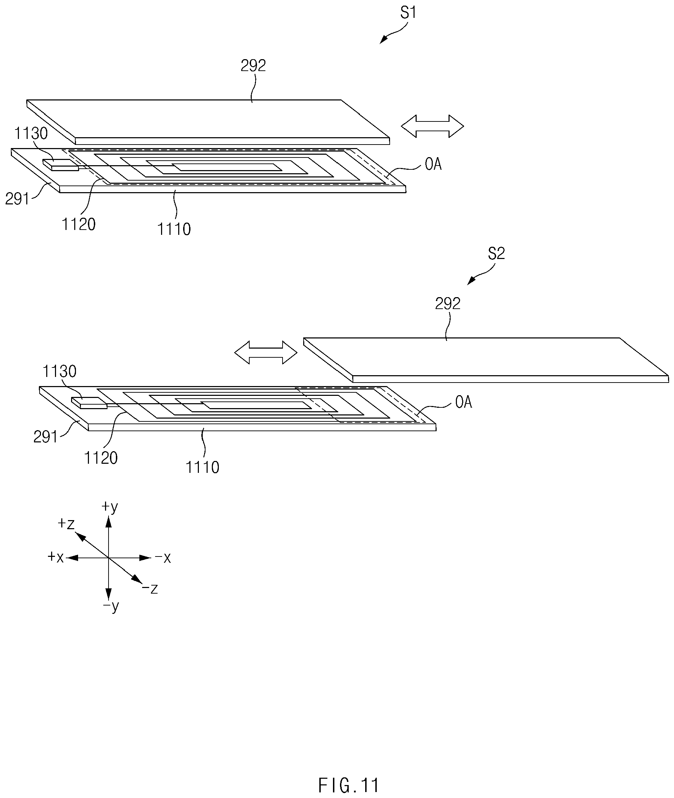

The sensor 290 may further include a sensing circuit (not illustrated) (e.g., a sensing circuit 1130 of FIG. 11). The sensing circuit may be mounted on the first printed circuit board 271 or the first structure 291. The sensing circuit may be electrically connected to the coil pattern of the first structure 291. The sensing circuit may apply an alternating current to the coil pattern of the first structure 291. The sensing circuit may detect an inductance by using an electrical signal that is detected by using the coil pattern of the first structure 291. For example, the sensing circuit may include a capacitor that is connected to the coil pattern in parallel. The sensing circuit may apply an alternating current corresponding to driving of a resonant frequency to the coil pattern, and may detect an inductance by using the resonant frequency and a capacitor value.

The inductance detected by using the sensing circuit may be determined based on an overlapping extent of the first structure 291 and the second structure 292. For example, when the second structure 292 includes a conductor, the overlapping extent and the inductance of the first structure 291 and the second structure 292 may be inversely proportional to each other. As another example, when the second structure 292 includes a shield material that shields a magnetic field, the overlapping extent and the inductance of the first structure 291 and the second structure 292 may be proportional to each other.

According to an embodiment, the electronic device 200 may detect a state of the electronic device 200 based on the detected inductance. According to another embodiment, the sensing circuit of the sensor 290 may generate state information related to the state of the electronic device 200 based on the detected inductance. The electronic device 200 may perform various operations based on the detected state of the electronic device 200. For example, the electronic device 200 may change a display area, in which visual information is displayed, based on a change in the detected state of the electronic device 200. As another example, the electronic device 200 may provide a user interface (UI) to the user based on the detected state of the electronic device 200.

The electronic device 200 according to an embodiment may detect a change in inductance by using the sensor 290 including the first structure 291 and the second structure 292 whereby a preciseness of detection of the state (e.g., the expansion degree) of the electronic device 200 may be enhanced and a current consumption for detecting the state of the electronic device 200 may be reduced. Furthermore, state information of a high preciseness may be provided to the processor (e.g., the processor 120 of FIG. 1) whereby the electronic device 200 may provide a user interface (UI) corresponding to the state of the electronic device 200 promptly and precisely and may prevent misrecognition of a touch input by the user. Furthermore, a detection error or an error occurrence due to a change in an external magnetic field may be prevented.

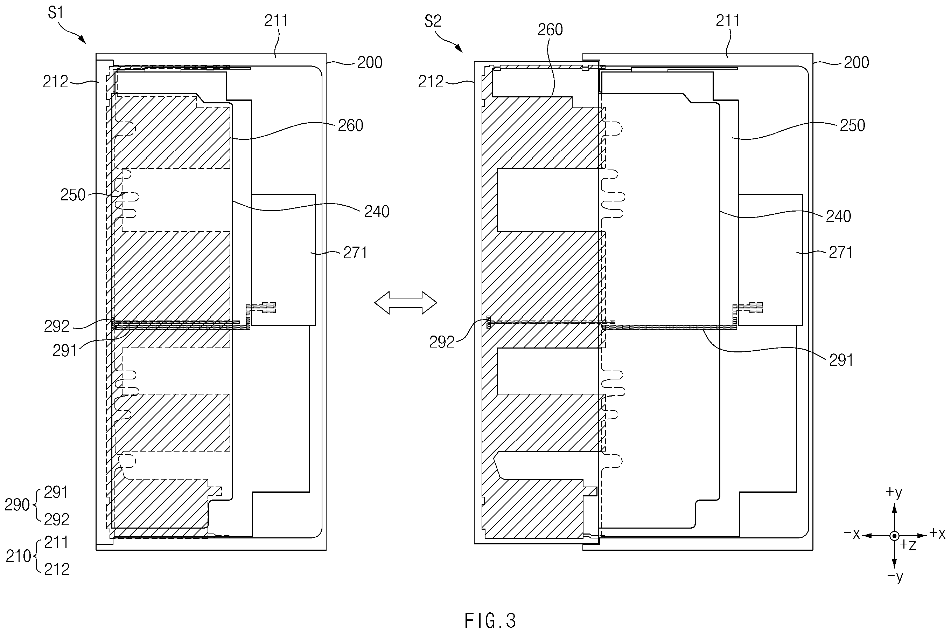

FIG. 3 is a plan view illustrating some configurations included in the electronic device according to an embodiment, in the first state and the second state. The electronic device 200 according to an embodiment may include the housing 210, the rear plate 240, the first support member 250, the second support member 260, the first printed circuit board 271, and the sensor 290. The sensor 290 may include the first structure 291, and the second structure 292 that overlaps at least a portion of a coil pattern of the first structure 291 in a +/-y direction.

According to the state of the electronic device 200, a disposition relationship of the first housing 211, the second housing 212, the rear plate 240, the first support member 250, the second support member 260, and the sensor 290 may be changed. In a first state S1 (e.g., the contracted state) of the electronic device 200, the second housing 212 may be located inside the first housing 211. In the first state S1, the second support member 260 may overlap the rear plate 240 and the first support member 250 in the +/-z direction. For example, in the first state S1, the rear plate 240 may be located on a side of the first support member 250 in the +z direction, and the second support member 260 may be located between the rear plate 240 and the first support member 250. In the first state S1, an overlapping extent of the first structure 291 and the second structure 292 in the +/-y direction may be maximal.

As the second housing 212 is extracted from the first housing 211 in the -x direction, the state of the electronic device 200 may be changed from the first state S1 to a second state S2 (e.g., the expanded state). As the second housing 212 is moved in the -x direction, the second support member 260 may be moved in the -x direction. In the second state S2, the second support member 260 may be disposed on a side of the rear plate 240 and the first support member 250 in the -x direction. In the second state S2, the second support member 260 may not overlap the rear plate 240 and the first support member 250 in the +/-z direction, or the overlapping extent of the rear plate 240 and the first support member 250 may be minimal. As the second support member 260 is moved in the -x direction, the second structure 292 may be moved in the -x direction, and the overlapping extent of the first structure 291 and the second structure 292 may become gradually smaller. In the second state S2, the overlapping extent of the first structure 291 and the second structure 292 in the +/-y direction may be minimal.

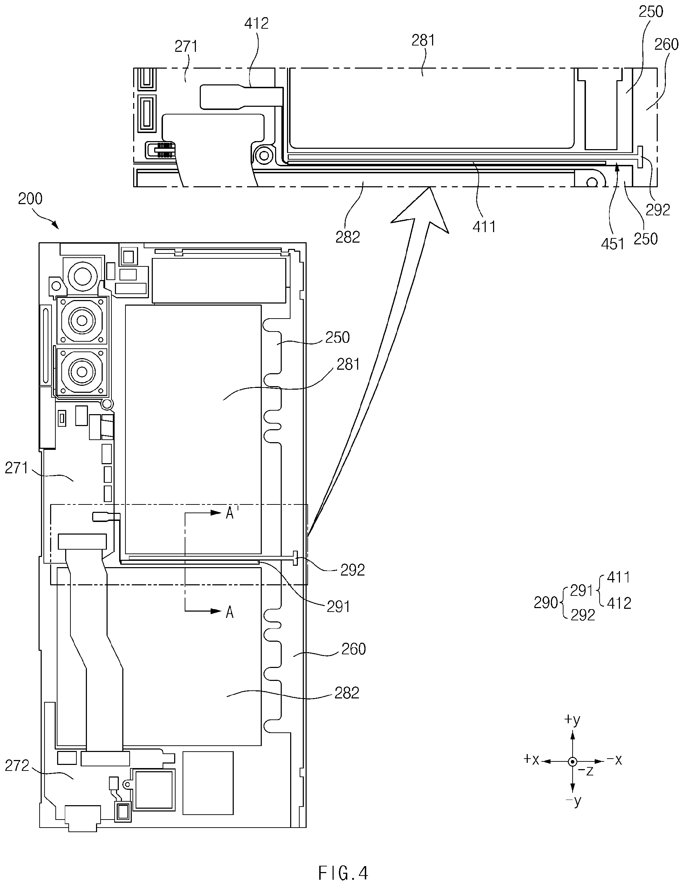

FIG. 4 is a rear view illustrating some configurations of the electronic device according to an embodiment, in the first state of the electronic device. Referring to FIG. 4, the electronic device 200 according to an embodiment may include the first support member 250, the second support member 260, the first printed circuit board 271, the second printed circuit board 272, the first battery 281, the second battery 282, and the sensor 290. The first printed circuit board 271, the second printed circuit board 272, the first battery 281, and the second battery 282 may be disposed on a surface of the first support member 250 in the -z direction, or may be fixed to at least one area of the first support member 250. The first battery 281 and the second battery 282 may be disposed in parallel to the +/-y direction.

The sensor 290 may include the first structure 291 and the second structure 292. The first structure 291 may include a first part 411, in which the coil pattern is located, and a second part 412 that extends from the first part 411 to be connected to the first printed circuit board 271. At least a portion of the first structure 291 may be located in one area of the first support member 250. The first support member 250 may include a seating area 451, on which the first part 411 of the first structure 291 is seated, and the first part 411 of the first structure 291 may be located in the seating area 451 of the first support member 250. The seating area 451 of the first support member 250 and the first part 411 of the first structure 291 may be located in a peripheral part of one side surface (e.g., a surface in the +/-y direction) of at least any one of the first battery 281 and the second battery 282, and may extend in the same direction as an extension direction (e.g., the +/-x direction) of an adjacent one side surface. For example, the seating area 451 of the first support member 250 and the first structure 291 may be located between the first battery 281 and the second battery 282 and may extend in the +/-x direction. A front surface (e.g., a surface in the +y direction) of the first part 411 of the first structure 291 may face one side surface (e.g., a surface in the +/-y direction) of at least any one of the first battery 281 and the second battery 282.

The second structure 292 may be located on one surface (e.g., a surface in the -z direction) of the second support member 260. The second structure 292 may be disposed to overlap at least a portion of the first part 411 of the first structure 291 in the +/-y direction in the seating area 451 of the first support member 250. The second structure 292 may be moved in the +x direction or the -x direction with respect to the first structure 291 and the first support member 250 as the second housing (e.g., the second housing 212 of FIG. 2) and the second support member 260 are slid. According to the state (e.g., the expansion state) of the electronic device 200, a relative location of the second structure 292 to the first structure 291 may be changed, and an overlapping extent of the first part 411 of the first structure 291 and the second structure 292 may be changed.

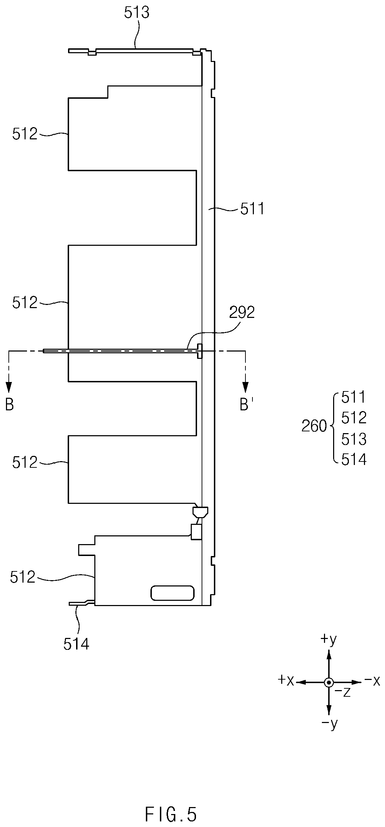

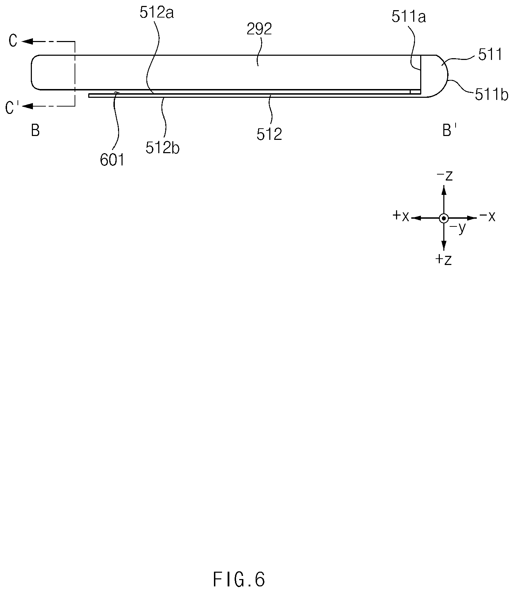

Hereinafter, referring to FIGS. 5 and 6, the second structure 292 will be described. FIG. 5 is a rear view illustrating some configurations of the electronic device according to an embodiment. FIG. 6 is a cross-sectional view, taken along line B-B' of FIG. 5.

Referring to FIGS. 5 and 6, the electronic device according to an embodiment may include the second support member 260 and the second structure 292. The second support member 260 may include a first support part 511, a second support part 512, a first fastening part 513, and a second fastening part 514.

The first support part 511 may extend in the +/-y direction. The first support part 511 may include a first surface 511a that is located in the +x direction, and a second surface 511b that is located in the -x direction. The second surface 51 1b of the first support part 511 may include a curved surface of a specific curvature. The second surface 511b of the first support part 511 may be surrounded by a bending area of the display (e.g., the display 220 of FIG. 2). The second surface 511b of the first support part 511 may support a rear surface of the bending area of the display such that the bending area of the display is bent while maintaining a specific curvature.

The second support part 512 may be connected to one side surface (e.g., the first surface 511a) of the first support part 511 in the +x direction. The second support part 512 may include a third surface 512a that is located in the - z direction, and a fourth surface 512b that is located in the +z direction. A thickness of the second support part 512 in the +/-z direction may be smaller than a thickness of the first support part 511 in the +/-z direction. In the first state (e.g., the contracted state) of the electronic device, the second support part 512 may be disposed between the rear plate (e.g., the rear plate 240 of FIG. 2) and the first support member (e.g., the first support member 250 of FIG. 2). In the second state (e.g., the expanded state) or the third state (e.g., the middle state) of the electronic device, at least a portion of the fourth surface 512b of the second support part 512 may be disposed on the rear surface of the second area (e.g., the second area A2 of FIG. 2) to support at least a portion of the second area of the display.

The first fastening part 513 may extend from one end (e.g., an end in the +y direction) of the first support part 511 in the +x direction. The first fastening part 513 may be coupled to one side surface (e.g., a side surface in the +y direction) of the second housing (e.g., the second housing 212 of FIG. 2) or the first support member 250. The second fastening part 514 may extend from an opposite end (e.g., an end in the -y direction) of the first support part 511 in the +x direction. The second fastening part 514 may be coupled to one side surface (e.g., a side surface in the -y direction) of the second housing (e.g., the second housing 212 of FIG. 2) or the first support member 250.

The second structure 292 may extend in a sliding direction (e.g., the +/x direction) of the second housing (e.g., the second housing 212 of FIG. 2). The second structure 292 may be located on a side of at least a portion (e.g., the second support part 512) of the second support member 260 in the -z direction. The second structure 292 may be located on the third surface 512a of the second support part 512 of the second support member 260. One area of the second structure 292 may be connected to the first surface 511a of the first support part 511 of the second support member 260. The second structure 292 may be attached to at least a portion of the first surface 5 11a of the first support part 511 of the second support member 260 or the third surface 512a of the second support part 512. The second structure 292 may be spaced apart from the third surface 512a of the second support part 512 by a specific distance, and may define a gap 601 that is located between the second structure 292 and the third surface 512a of the second support part 512. At least a portion of the first support member 250 may be disposed in the gap 601 located between the second structure 292 and the third surface 512a of the second support part 512.

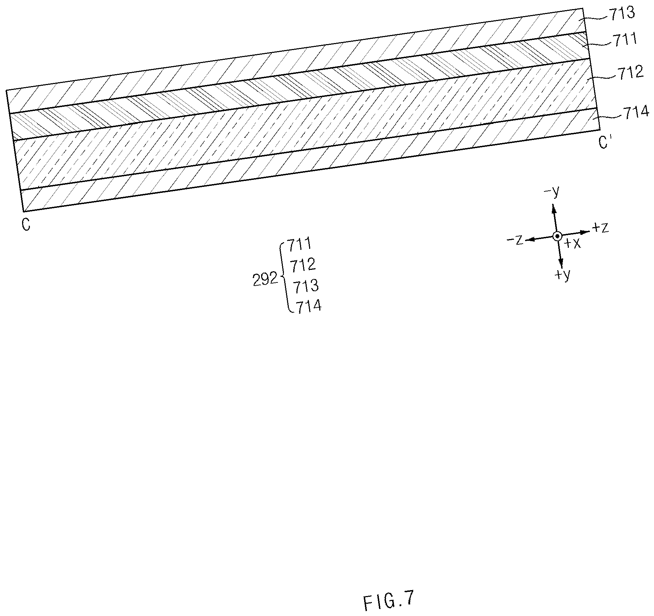

Hereinafter, referring to FIG. 7, the second structure 292 will be described. FIG. 7 is a cross-sectional view, taken along line C-C' of FIG. 6. Referring to FIG. 7, the second structure 292 may include a main layer 711, a fixed member 712, a first protective layer 713, and a second protective layer 714. The first protective layer 713, the main layer 711, the fixed member 712, and the second protective layer 714 of the second structure 292 may be laminated in a direction (e.g., the +y direction) that is perpendicular to a thickness direction (e.g., the +z direction) of the electronic device.

According to an embodiment, the main layer 711 may include a conductor. For example, the main layer 711 may include at least one of copper (Cu), aluminum (Al), and a sodium-potassium alloy (NaK). According to another embodiment, the main layer 711 may include a shield material including a material that shields a magnetic field. For example, the main layer 711 may include ferrite.

The fixed member 712 may be located on a side of the main layer 711 in the +y direction. At least a portion of the fixed member 712 may be fixed (or attached) to the second support member (e.g., the second support member 260 of FIG. 5). The main layer 711 may be fixed to the second support member 260 by the fixed member 712. The fixed member 712 may include a material having a specific strength or more. For example, the fixed member 712 may include a sodium-potassium alloy (NaK). The second structure 292 may include the fixed member 712 to prevent deflection thereof and reinforce durability.

The first protective layer 713 and the second protective layer 714 may be located on an outer surface of the second structure 292 in the +/-y direction. The first protective layer 713 may cover one surface of the main layer 711. The first protective layer 713 may be located on a side of the main layer 711 in the -y direction. The second protective layer 714 may cover one surface of the fixed member 712. The second protective layer 714 may be located on a side of the fixed member 712 in the +y direction. The first protective layer 713 and the second protective layer 714 may include a Teflon tape. The first protective layer 713 and the second protective layer 714 may prevent damage due to frictions that occur as the second structure 292 is moved.

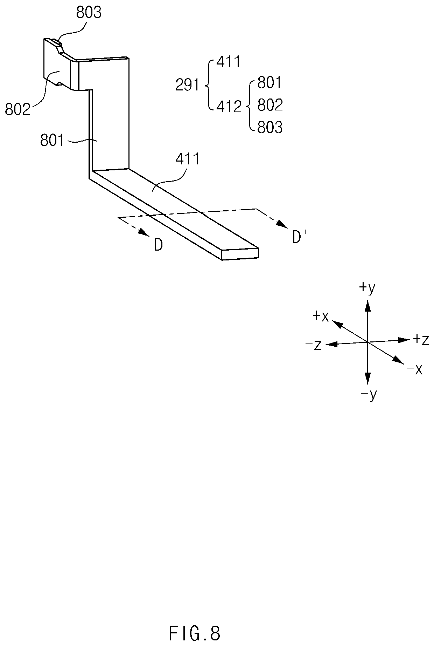

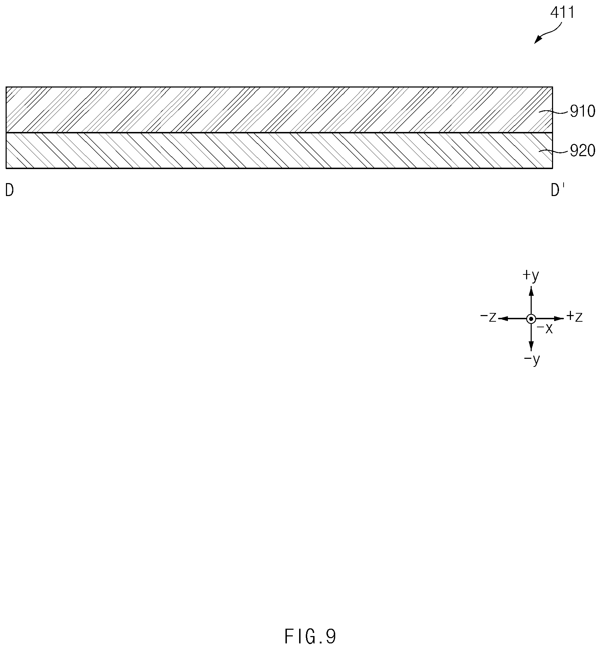

Hereinafter, referring to FIGS. 8 and 9, the first structure 291 included in the electronic device according to an embodiment will be described. FIG. 8 is a perspective view of the first structure 291 included in the electronic device according to an embodiment. FIG. 9 is a cross-sectional view, taken along line D-D' of FIG. 8.

Referring to FIG. 8, the first structure 291 may include the first part 411, in which the coil pattern is located, and the second part 412 that extends from the first part 411 to be connected to the printed circuit board (e.g., the first printed circuit board 271) of the electronic device. The first part 411 of the first structure 291 may extend in a sliding direction (e.g., the +/-x direction) of the second housing (e.g., the second housing 212 of FIG. 2). The configurations included in the first part 411 of the first structure 291 may be laminated in the +/-y direction.

Referring to FIG. 9, the first part 411 of the first structure 291 may include a coil pattern layer 910 and a shield layer 920. The shield layer 920 and the coil pattern layer 910 of the first part 411 of the first structure 291 may overlap each other in a direction (e.g., the +/-y direction) that is perpendicular to a thickness direction (e.g., the +z direction) of the electronic device.

The coil pattern layer 910 may include a substrate, and a coil pattern of a closed curve, which is connected to a substrate and opposite ends thereof. The coil pattern layer 910 may include a plurality of layers. For example, the coil pattern layer 910 may include a coil pattern that is located in at least one flexible substrate and the plurality of layers. An alternating current (AC) signal may be applied to the coil pattern of the coil pattern layer 910. The coil pattern of the coil pattern layer 910 may form a magnetic field as an alternating current is applied thereto.

The shield layer 920 may overlap the coil pattern layer 910 in the +/-y direction. The shield layer 920 may be located on a side of the coil pattern layer 910 in the -y direction. The shield layer 920 may include a material that shields a magnetic field. For example, the shield layer 920 may include ferrite. The shield layer 920 may prevent noise from being introduced into the first structure 291, and may prevent a sensing sensitivity from being degraded.

Referring to FIG. 8, the second part 412 of the first structure 291 may include a first connection part 801 that is connected to one end of the first part 411 and extends in the +y direction, a second connection part 802 that is connected to one end of the first connection part 801 and extends in the +x direction, and a connector 803 that is located in the second connection part 802. A conductive pattern that is electrically connected to the coil pattern of the first part 411 and the connector 803 may be located in the first connection part 801 and the second connection part 802. The connector 803 may be mounted on the second connection part 802 to face a direction (e.g., the +z direction) that is perpendicular to a lamination direction (e.g., the +y direction) of the shield layer 920 and the coil pattern layer 910 of the first part 411.

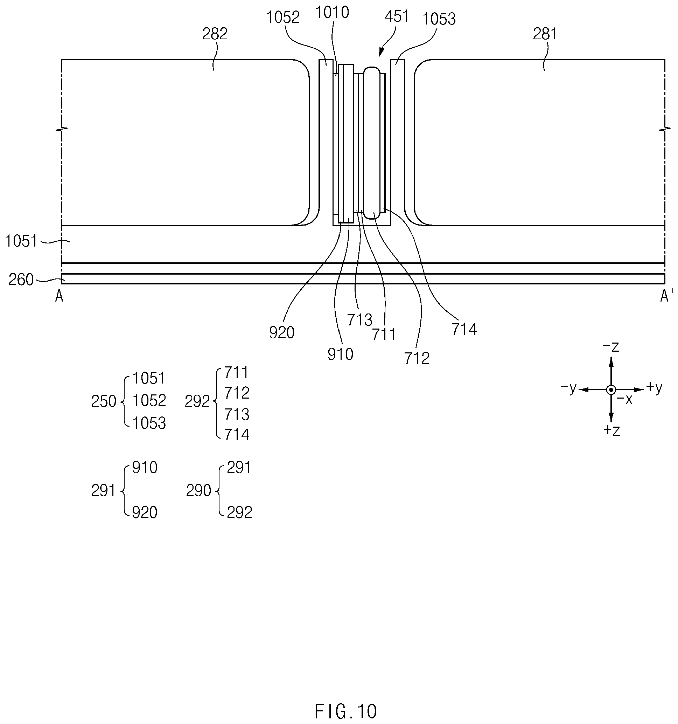

Hereinafter, referring to FIG. 10, disposition of the first structure 291 and the second structure 292 in the electronic device according to an embodiment will be described. FIG. 10 is a cross-sectional view, taken along line A-A' of FIG. 4 in the electronic device according to an embodiment. Referring to FIG. 10, the electronic device according to an embodiment may include the first support member 250, the second support member 260, the first battery 281, the second battery 282, the sensor 290, and a bonding layer 1010. The sensor 290 may include the first structure 291 and the second structure 292.

The first support member 250 may include a plate 1051, a first partition wall 1052, and a second partition wall 1053. The plate 1051 may be disposed on a plane that is perpendicular to the +z direction. The first battery 281 and the second battery 282 may be disposed in parallel to each other in the +/-y direction on one surface (e.g., a surface in the -z direction) of the plate 1051. The first partition wall 1052 and the second partition wall 1053 may protrude from the plate 1051 in the -z direction. The first partition wall 1052 and the second partition wall 1053 may face each other in the +/-y direction. The first partition wall 1052 and the second partition wall 1053 may be located between the first battery 281 and the second battery 282. One area of the plate 1051, the first partition wall 1052, and the second partition wall 1053 may define the seating area 451 of the first support member 250. The seating area 451 may be an area that is surrounded by the one area of the plate 1051, the first partition wall 1052, and the second partition wall 1053. In the first state (e.g., the contracted state) of the electronic device, the first support member 250 may overlap the second support member 260 in the +/-z direction.

The first structure 291 and the second structure 292 may overlap each other in the +/-y direction. The second structure 292 may be moved in the +/-x direction with respect to the first structure 291. At least a portion of the first structure 291 and at least a portion of the second structure 292 may be located in the seating area 451 of the first support member 250. At least a portion of the first structure 291 and at least a portion of the second structure 292 may be located between the first partition wall 1052 and the second partition wall 1053. For example, the first part 411 (see FIG. 4) of the first structure 291 and one area of the second structure 292, which overlaps the first structure 291, may be located in the seating area 451.

The bonding layer 1010 may be located between the first structure 291 and the first partition wall 1052. The first structure 291 (or the first part 411 (see FIG. 4) of the first structure 291) may be attached (or fixed) to one surface (e.g., a surface in the -y direction) of the first partition wall 1052 by the bonding layer 1010.

The coil pattern layer 910 and the shield layer 920 of the first structure 291 may overlap each other in the +/-y direction. A front surface (e.g., a surface in the +y direction) of the coil pattern layer 910 may be adjacent to the second structure 292. The shield layer 920 may be located on a rear surface (e.g., a surface in the -y direction) of the coil pattern layer 910.

The second structure 292 may be linearly moved in the +/-x direction with respect to the first structure 291. The main layer 711, the fixed member 712, the first protective layer 713, and the second protective layer 714 of the second structure 292 may overlap each other in the +/-y direction. The main layer 711 may be located on a side (e.g., a side in the -y direction) that is adjacent to the first structure 291, and the fixed member 712 may be located on a side (e.g., a side in the +y direction) that is distant from the first structure 291. The first protective layer 713 may be located on one surface (e.g., a surface in the - y direction) of the main layer 711 to prevent damage to the first structure 291 and the second structure 292 due to frictions by contact of the first structure 291 and the second structure 292.

Hereinafter, referring to FIG. 11, a change in a location of the second structure relative to the first structure according to the state (e.g., the expansion degree) of the electronic device will be described. FIG. 11 is a view illustrating a change in the location of the second structure relative to the first structure according to the state of the electronic device. Hereinafter, an operation of the electronic device may be referenced as an operation of the processor (e.g., the processor 120 of FIG. 1).

The sensor 290 of the electronic device according to an embodiment may include the first structure 291, the second structure 292, and the sensing circuit 1130. The first structure 291 may include a substrate 1110, and a coil pattern 1120 that is located in the substrate 1110.

The sensing circuit 1130 may be connected to opposite ends of the coil pattern 1120. The sensing circuit 1130 may apply an alternating current (AC) signal to the coil pattern 1120. The sensing circuit 1130 may detect an inductance of the coil pattern 1120. The sensing circuit 1130 may be located in the substrate 1110 of the first structure 291. When the sensing circuit 1130 is located in the first structure 291, losses that occur in the connector or a connection wire may be reduced, and external noise may be prevented from being introduced.

In the first state S1 (e.g., the contracted state) of the electronic device, an extent of an overlapping area OA of the coil pattern 1120 that overlaps the second structure 292 in the +/-y direction may be maximal. As the state of the electronic device is changed from the first state S1 to the second state S2 (e.g., the expanded state), the second structure 292 may be moved in one direction (e.g., the -x direction), and the extent of the overlapping area OA of the second structure 292 and the coil pattern 1120 may become gradually smaller. In the second state S2 (e.g., the expanded state) of the electronic device, the extent of the overlapping area OA of the coil pattern 1120 that overlaps the second structure 292 in the +/-y direction may be minimal.

According to the extent of the overlapping area OA of the second structure 292 and the coil pattern 1120, an inductance detected by the sensing circuit 1130 may be changed. In an embodiment, the main layer (e.g., the main layer 711 of FIG. 7) of the second structure 292 may include a conductor (e.g., a metal). When an alternating current is applied to the coil pattern 1120 of the first structure 291, an eddy current by an induced electromotive force is generated in the conductor whereby a magnetic field formed by the coil pattern of the second structure 292 may be reduced. In this case, the eddy current may increase as the extent of the overlapping area OA of the conductor and the coil pattern 1120 becomes larger, and the inductance detected by the sensing circuit 1130 may be inversely proportional to the extent of the overlapping area OA. For example, the inductance detected in the first state S1 may be a minimum value, the inductance detected as the state is changed from the first state S1 to the second state S2 may become gradually higher, and the inductance detected in the second state S2 may be a maximum value.

In another embodiment, the main layer (e.g., the main layer 711 of FIG. 7) of the second structure 292 may include a shield material (e.g., ferrite). The shield material may include a high magnetic permeability and a high resistance to restrain eddy currents, and may prevent loss of the inductance due to the air or the configuration including the conductor in the interior of the electronic device. In this case, the inductance detected by the sensing circuit 1130 may be proportional to the extent of the overlapping area OA. For example, the inductance detected in the first state S1 may be a maximum value, the inductance detected as the state is changed from the first state S1 to the second state S2 may become gradually lower, and the inductance detected in the second state S2 may be a minimum value.

The electronic device according to an embodiment may detect an inductance that is changed according to the location of the second structure 292 by using the sensing circuit 1130, and may generate state information on the state (e.g., the expansion degree) of the electronic device based on the detected inductance. The electronic device may perform operations corresponding to the state of the electronic device based on the detected inductance or state information.

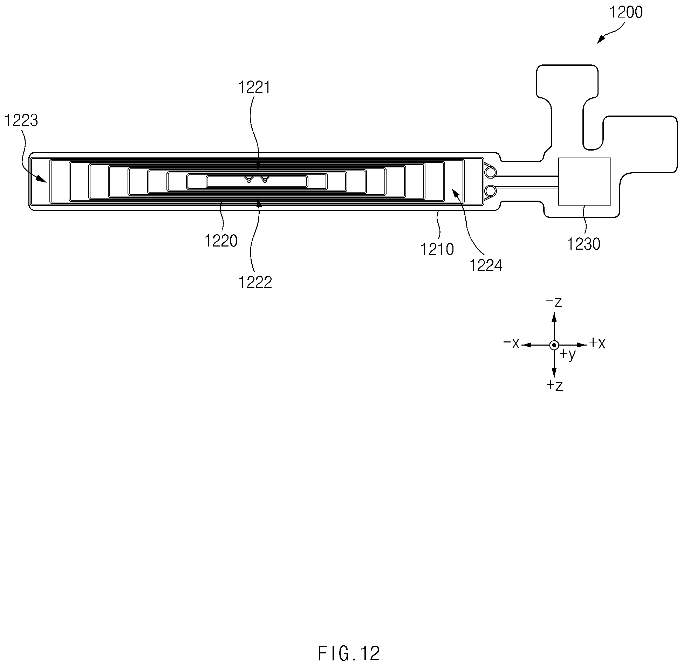

FIG. 12 is a plan view illustrating a first structure 1200 of the sensor included in the electronic device according to an embodiment. The first structure 1200 may include a substrate 1210, a coil pattern 1220 that is located in the substrate 1210, and a sensing circuit 1230 that is electrically connected to the coil pattern 1220. According to an embodiment, the sensing circuit 1230 may be located in a printed circuit board (e.g., the first printed circuit board 271) that is connected to the first structure 1200.

An area of the first structure 1200, in which the coil pattern 1220 is located, may include a first pattern area 1221, a second pattern area 1222, a third pattern area 1223, and a fourth pattern area 1224. The first pattern area 1221 may be located in one area of the first structure 1200 in the -z direction, and the second pattern area 1222 may be located in one area of the first structure 1200 in the +z direction. The third pattern area 1223 may be located in one area of the first structure 1200 in the -x direction, and the fourth pattern area 1224 may be located in one area of the first structure 1200 in the +x direction. In the first pattern area 1221 and the second pattern area 1222, the coil pattern 1220 may extend in the +/-x direction. In the third pattern area 1223 and the fourth pattern area 1224, the coil pattern 1220 may extend in the +/-z direction.

In an embodiment, a pattern density of at least one pattern area may be smaller than a pattern density of another one. The pattern density may be an extent of the coil pattern 1220 located in a unit area. For example, the pattern densities of the third pattern area 1223 and the fourth pattern area 1224 may be smaller than the pattern densities of the first pattern area 1221 and the second pattern area 1222. An interval between the coil patterns 1220 in the third pattern area 1223 and the fourth pattern area 1224 may be larger than an interval between the coil patterns 1220 in the first pattern area 1221 and the second pattern area 1222.

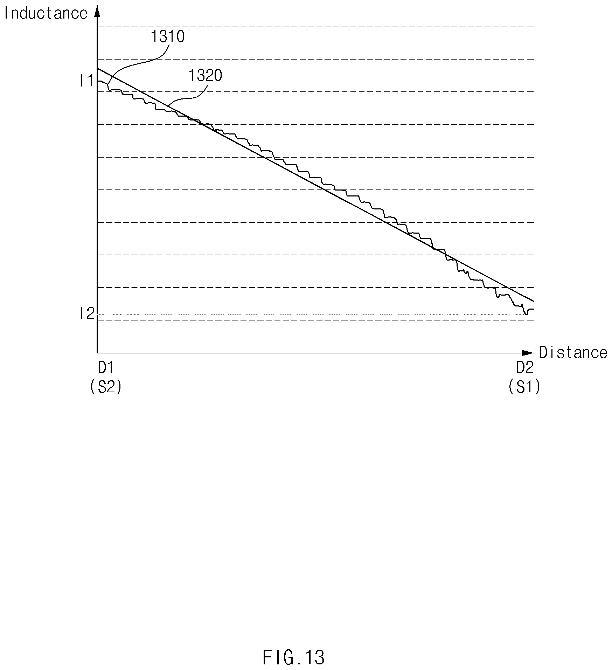

FIG. 13 is a change in inductance according to a movement distance of the second structure. For example, FIG. 13 illustrates a change in the inductance detected by using the first structure 1200 including the coil pattern 1220 of FIG. 12 and the second structure including the conductor. A first line 1310 indicates an inductance according to a movement distance (or the expansion degree of the electronic device) of the second structure. A second line 1320 indicates a value that is obtained by linearly transforming the first line 1310. Hereinafter, an operation of the electronic device may be referenced as an operation of the processor (e.g., the processor 120 of FIG. 1).

The second structure may be located at a first location D1 in the second state S2 (e.g., the expanded state) of the electronic device. For example, the first location D1 may correspond to a location of the second structure 292 in the second state S2 of FIG. 11. As the state of the electronic device is changed from the second state S2 to the first state S1 (e.g., the contracted state), the second structure may be moved from the first location D1 to a second location D2. For example, the second location D2 may correspond to a location of the second structure 292 in the first state S1 of FIG. 11. At the first location D1 of the second structure, an extent of an overlapping area of the first structure and the second structure may be minimal. At the second location D2 of the second structure, the extent of the overlapping area of the first structure and the second structure may be maximal. As the state of the electronic device is changed from the second state S2 to the first state S1, the overlapping area of the first structure and the second structure may become gradually wider.

As the second structure is moved from the first location D1 to the second location D2, the inductance may become gradually lower. The overlapping area of the first structure and the second structure and the inductance may be inversely proportional to each other. For example, when the second structure is at the first location D1, the inductance may be a first value I1. The first value I1 may be a maximum value of the inductance. When the second structure is at the second location D2, the inductance may be a second value 12. The second value I2 may be a minimum value of the inductance.

The electronic device according to an embodiment may detect a state (e.g., the expansion degree) of the electronic device, which corresponds to the inductance detected by using the sensing circuit. For example, the electronic device may acquire values of the second line 1320 by linearly transforming the detected inductance, and may detect the state of the electronic device corresponding the linearly transformed values of the inductance. The electronic device may perform various operations based on the detected state of the electronic device.

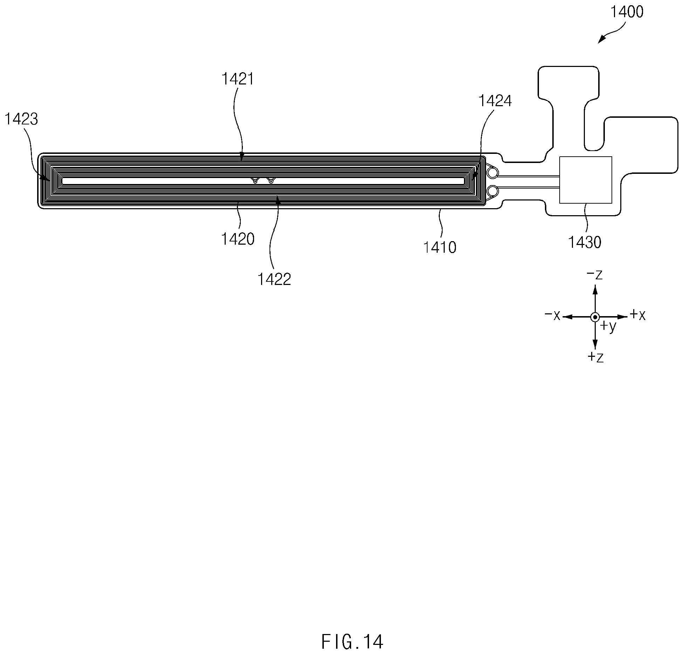

FIG. 14 is a plan view illustrating a first structure 1400 of the sensor included in the electronic device according to an embodiment. The first structure 1400 may include a substrate 1410, a coil pattern 1420 that is located in the substrate 1410, and a sensing circuit 1430 that is electrically connected to the coil pattern 1420. According to an embodiment, the sensing circuit 1430 may be located in a printed circuit board (e.g., the first printed circuit board 271 of FIG. 2) that is connected to the first structure 1400.

An area of the first structure 1400, in which the coil pattern 1420 is located, may include a first pattern area 1421, a second pattern area 1422, a third pattern area 1423, and a fourth pattern area 1424. The first pattern area 1421 may be located in an area of the first structure 1400 in the -z direction, and the second pattern area 1422 may be located in an area of the first structure 1400 in the +z direction. The third pattern area 1423 may be located in an area of the first structure 1400 in the -x direction, and the fourth pattern area 1424 may be located in an area of the first structure 1400 in the +x direction. In the first pattern area 1421 and the second pattern area 1422, the coil pattern 1420 may extend in the +/-x direction. In the third pattern area 1423 and the fourth pattern area 1424, the coil pattern 1420 may extend in the +/-z direction.

In an embodiment, all of pattern densities of the first pattern area 1421, the second pattern area 1422, the third pattern area 1423, and the fourth pattern area 1424 may be the same. For example, in the first pattern area 1421, the second pattern area 1422, the third pattern area 1423, and the fourth pattern area 1424, all of intervals between the coil patterns 1420 may be the same.

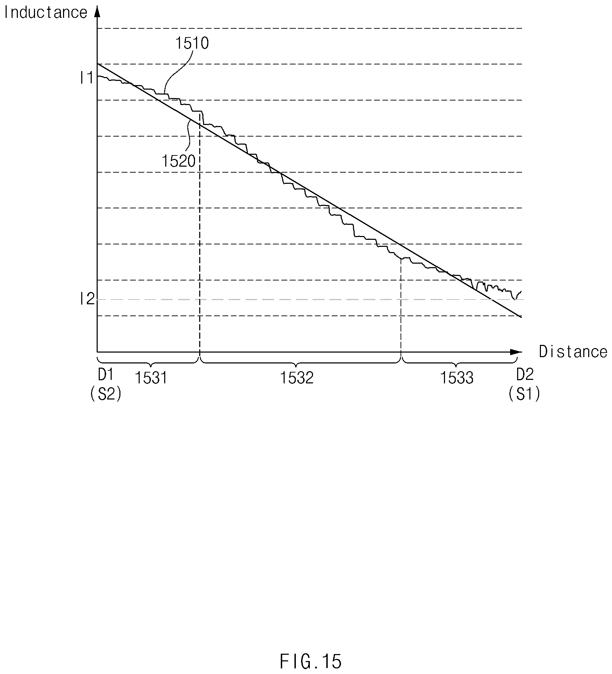

FIG. 15 illustrates a change in inductance according to a movement distance of the second structure. For example, FIG. 15 illustrates a change in the inductance detected by using the first structure 1400 including the coil pattern 1420 of FIG. 14 and the second structure including a conductor. A first line 1510 indicates an inductance according to a movement distance (or an expansion degree of the electronic device) of the second structure. A second line 1520 indicates a value obtained by linearly transforming the first line 1510. Hereinafter, an operation of the electronic device may be referenced as an operation of the processor (e.g., the processor 140 of FIG. 1).

The second structure may be located at the first location D1 in the second state S2 (e.g., the expanded state) of the electronic device. For example, the first location D1 may correspond to the location of the second structure 292 in the second state S2 of FIG. 11. As the state of the electronic device is changed from the second state S2 to the first state S1 (e.g., the contracted state), the second structure may be moved from the first location D1 to the second location D2. For example, the second location D2 may correspond to the location of the second structure 292 in the first state S1 of FIG. 11. At the first location D1 of the second structure, the extent of the overlapping area of the first structure and the second structure may be minimal. At the second location D2 of the second structure, the extent of the overlapping area of the first structure and the second structure may be maximal. As the state of the electronic device is changed from the second state S2 to the first state S1, the overlapping area of the first structure and the second structure may become gradually wider.

As the second structure is moved from the first location D1 to the second location D2, the inductance may become gradually lower. The overlapping area of the first structure and the second structure and the inductance may be inversely proportional to each other. For example, when the second structure is at the first location D1, the inductance may be a first value I1. The first value I1 may be a maximum value of the inductance. When the second structure is at the second location D2, the inductance may be a second value I2. The second value I2 may be a minimum value of the inductance.

The electronic device according to an embodiment may detect the state (e.g., the expansion degree) of the electronic device, which corresponds to the inductance detected by using the sensing circuit. For example, the electronic device may acquire values of the second line 1320 by linearly transforming the detected inductance, and may detect the state of the electronic device corresponding to the linearly transformed values of the inductance. The electronic device may perform various operations based on the detected state of the electronic device.

The state of the electronic device may include a first section 1531, in which a change in the state is started from the second state S2 or a change in the state is ended in the second state S2, a second section 1533, in which a change in the state is started in the first state S1 or a change in the state is ended in the first state S1, and a third section 1532 between the first section 1531 and the second section 1533.

Based on the densities of the coil patterns for the areas of the first structure, changes in the inductance in the first section 1531, the second section 1533, and the third section 1532 may be determined. At the first line 1510 that indicates the inductance detected by using the first structure 1400 including the coil pattern 1420 of FIG. 14, an inclination of the third section 1532 may be larger than an inclination of the first section 1531 and an inclination of the second section 1533. In other words, a change in the inductance according to a change in the movement distance of the second structure in the third section 1532 may be larger than in the first section 1531 and the second section 1533. Accordingly, the state (e.g., the expansion degree) of the electronic device in the third section 1532 may be precisely detected, and a reliability of the detection of the state of the electronic device may be enhanced.

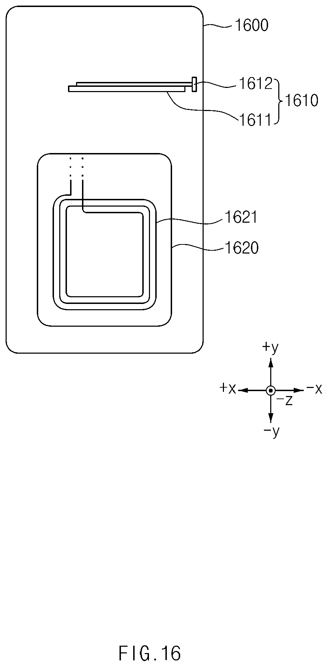

FIG. 16 is a plan view of an electronic device 1600 according to an embodiment. Referring to FIG. 16, the electronic device 1600 according to an embodiment may include a wireless charging module 1620 including a wireless charging coil 1620, and a sensor 1610 (e.g., the sensor 290 of FIG. 2). The sensor 1610 may include a first structure 1611 (e.g., the first structure 291 of FIG. 2) and a second structure 1612 (e.g., the second structure 292 of FIG. 2).

The wireless charging module 1620 may wirelessly receive electric power from an external electronic device (e.g., a wireless charging device) by using the wireless charging coil 1620. For example, the wireless charging module 1620 may support one or more of various wireless charging schemes including a magnetic resonance scheme or a magnetic induction scheme.

The sensor 1610 may be disposed not to overlap the wireless charging coil 1620 in the +/-z direction. The sensor 1610 may be spaced apart from the wireless charging coil 1620 by a specific distance in a direction that is perpendicular to the +/-z direction. Because the sensor 1610 is disposed to be spaced apart from the wireless charging coil 1620, an interference of the sensor 1610 and the wireless charging coil 1620 may be prevented.

An electronic device according to an embodiment may include a first housing (e.g., the first housing 211 of FIG. 2), a second housing (e.g., the second housing 212 of FIG. 2) coupled to the first housing to be slid, a display (e.g., the display 220 of FIG. 2) configured such that a visually exposed area thereof is expanded or contracted as the second housing is slid, a first support member (e.g., the first support member 250 of FIG. 2) located inside the first housing, a second support member (e.g., the second support member 260 of FIG. 2) fixed to the second housing, and that is moved in a first direction or an opposite direction to the first direction as the second housing is slid, a sensor (e.g., the sensor 290 of FIG. 2), and a processor (e.g., the processor 120 of FIG. 1) operatively connected to the sensor, the sensor may include a first structure (e.g., the first structure 291 of FIG. 2) located in one area of the first support member, and including a coil pattern, a second structure (e.g., the second structure 292 of FIG. 2) disposed to overlap at least a portion of the coil pattern of the first structure, and fixed to the second support member to be linearly moved in the first direction or the opposite direction of the first direction with respect to the first structure, and a sensing circuit (e.g., the sensing circuit 1130 of FIG. 11) electrically connected to the coil pattern and that detects an inductance by using the coil pattern, and the processor may detect a state of the electronic device based on the detected inductance.

According to an embodiment, the first support member and the second support member may overlap each other in a second direction that is perpendicular to the first direction in a first state of the electronic device, and the second structure may overlap at least a portion of the coil pattern of the first structure in a third direction that is perpendicular to the second direction.

According to an embodiment, the first structure may include a coil pattern layer (e.g., the coil pattern layer 910 of FIG. 9) including the coil pattern, and a shield layer (e.g., the shield layer 920 of FIG. 9) overlapping the coil pattern layer in the third direction and including a material that shields a magnetic field.

The electronic device according to an embodiment may further include a printed circuit board (e.g., the first printed circuit 271 of FIG. 2), and one end of the first structure may be connected to the printed circuit board.

According to an embodiment, the sensing circuit may be located in the printed circuit board.

According to an embodiment, the sensing circuit may be located in at least one area of the first structure.

According to an embodiment, the second structure may include a main layer (e.g., the main layer 711 of FIG. 7), and a fixed member (e.g., the fixed member 712 of FIG. 7) overlapping the main layer in the third direction and fixed to the second support member.

According to an embodiment, the main layer may include a conductor or a shield material that shields a magnetic field.

According to an embodiment, the second structure may further include a first protective layer covering one surface of the main layer and a second protective layer covering one surface of the fixed member.

According to an embodiment, an extent of an area, in which the second structure and the coil pattern of the first structure overlap each other, may be maximal in the first state, and the extent of the area, in which the second structure and the coil pattern of the first structure overlap each other, becomes gradually smaller as the second housing is moved in the first direction.

According to an embodiment, the first support member may include a plate (e.g., the plate 1051 of FIG. 10), and a first partition wall (e.g., the first partition wall 1052 of FIG. 10) and a second partition wall (e.g., the second partition wall 1053 of FIG. 10) protruding from the plate and facing each other in the third direction, and the area, in which the second structure and the coil pattern of the first structure overlap each other, may be located between the first partition wall and the second partition wall.

The electronic device according to an embodiment may further include a bonding layer (e.g., the bonding layer 1010 of FIG. 10) attached to at least one area of the first structure and the first partition wall.

The electronic device according to an embodiment may further include a battery (e.g., the first battery 281 or the second battery 282 of FIG. 2) located on one surface of the first support member, and the first structure and the second structure may be located in a peripheral part of one side surface of the battery.

According to an embodiment, a pattern density of one area of an area of the first structure, in which the coil pattern is located, may be lower than a pattern density of another area.

The electronic device according to an embodiment may further include a wireless charging coil (e.g., the wireless charging coil 1620 of FIG. 16), and the sensor and the wireless charging coil may not overlap each other in the second direction.

An electronic device according to an embodiment may include a first housing (e.g., the first housing 211 of FIG. 2), a second housing (e.g., the second housing 212 of FIG. 2) coupled to the first housing to be slid, a display including a first area located inside the housing and being visually exposed and a second area, in which a visually exposed area is variable as the second housing is slid, a first support member (e.g., the first support member 250 of FIG. 2) located inside the first housing, a second support member (e.g., the second support member 260 of FIG. 2) that is moved in a first direction or an opposite direction to the first direction as the second housing is slid, overlapping the first support member in a second direction that is perpendicular to the first direction in a first state of the electronic device, and located on a rear surface of the second area of the display in a second sate of the electronic device, a sensor (e.g., the sensor 290 of FIG. 2), and a processor (e.g., the processor 120 of FIG. 1) operatively connected to the sensor, the sensor may include a first structure (e.g., the first structure 291 of FIG. 2) located in one area of the first support member and including a coil pattern, a second structure (e.g., the second structure 292 of FIG. 2) fixed to the second support member to be linearly moved in the first direction or the opposite direction to the first direction with respect to the first structure, and disposed to overlap at least a portion of the coil pattern of the first structure in a third direction that is perpendicular to the first direction and the second direction, and a sensing circuit (e.g., the sensing circuit 1130 of FIG. 11) electrically connected to the coil pattern and that detects an inductance by using the coil pattern, and the processor may be configured to detect a state of the electronic device based on the detected inductance.

The electronic device according to an embodiment may further include a printed circuit board (e.g., the first printed circuit board 271 of FIG. 2), and the first structure may include a first part (e.g., the first part 411 of FIG. 4), in which the coil pattern is located, and a second part (e.g., the second part 412 of FIG. 4) extending from the first part and connected to the printed circuit board.

According to an embodiment, the first part of the first structure may include a coil pattern layer (e.g., the coil pattern layer 910 of FIG. 9) located in the coil pattern, and a shield layer (e.g., the shield layer 920 of FIG. 9) overlapping the coil pattern layer in the third direction and including a material that shields a magnetic field.

According to an embodiment, the second part of the first structure may include a connector connected to the printed circuit board, and a conductive pattern electrically connecting the connector and the coil pattern of the first part.

The electronic device according to an embodiment may further include a battery (e.g., the first battery 281 or the second battery 282 of FIG. 2) located on one surface of the first support member, and a front surface of the first part of the first structure and one side surface of the battery may face each other.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities and some of multiple entities may be separately disposed on the other components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing;
a second housing coupled to the first housing to be slid;
a display configured such that a visually exposed area thereof is expanded or contracted as the second housing is slid;
a first support member located inside the first housing;
a second support member fixed to the second housing, and configured to be moved in a first direction or an opposite direction to the first direction as the second housing is slid;
a sensor; and
a processor operatively connected to the sensor,
wherein the sensor includes:
a first structure located in one area of the first support member, and including a coil pattern;
a second structure disposed to overlap at least a portion of the coil pattern of the first structure, and fixed to the second support member to be linearly moved in the first direction or the opposite direction to the first direction with respect to the first structure; and
a sensing circuit electrically connected to the coil pattern and configured to detect an inductance by using the coil pattern, and
wherein the processor is configured to detect a state of the electronic device based on the detected inductance.

2. The electronic device of claim 1, wherein the first support member and the second support member overlap each other in a second direction that is perpendicular to the first direction in a first state of the electronic device, and
wherein the second structure overlaps at least a portion of the coil pattern of the first structure in a third direction that is perpendicular to the second direction.

3. The electronic device of claim 2, wherein the first structure includes:
a coil pattern layer including the coil pattern; and
a shield layer overlapping the coil pattern layer in the third direction and including a material that shields a magnetic field.

4. The electronic device of claim 3, further comprising:
a printed circuit board,
wherein one end of the first structure is connected to the printed circuit board.

5. The electronic device of claim 4, wherein the sensing circuit is located in the printed circuit board.

6. The electronic device of claim 4, wherein the sensing circuit is located in at least one area of the first structure.

7. The electronic device of claim 3, wherein the second structure includes:
a main layer; and
a fixed member overlapping the main layer in the third direction and fixed to the second support member.

8. The electronic device of claim 7, wherein the main layer includes a conductor or a shield material that shields a magnetic field.

9. The electronic device of claim 7, wherein the second structure further includes a first protective layer covering one surface of the main layer and a second protective layer covering one surface of the fixed member.

10. The electronic device of claim 2, wherein an extent of an area, in which the second structure and the coil pattern of the first structure overlap each other, is maximal in the first state, and
wherein the extent of the area, in which the second structure and the coil pattern of the first structure overlap each other, becomes gradually smaller as the second housing is moved in the first direction.

11. The electronic device of claim 2, wherein the first support member includes:
a plate; and
a first partition wall and a second partition wall protruding from the plate and facing each other in the third direction, and
wherein the area, in which the second structure and the coil pattern of the first structure overlap each other, is located between the first partition wall and the second partition wall.

12. The electronic device of claim 11, further comprising:
a bonding layer attached to at least one area of the first structure and the first partition wall.

13. The electronic device of claim 2, further comprising:
a battery located on one surface of the first support member,
wherein the first structure and the second structure are located in a peripheral part of one side surface of the battery.

14. The electronic device of claim 2, wherein a pattern density of one area of an area of the first structure, in which the coil pattern is located, is lower than a pattern density of another area.

15. The electronic device of claim 2, further comprising:
a wireless charging coil,
wherein the sensor and the wireless charging coil do not overlap each other in the second direction.
